# EUROPEAN PATENT SPECIFICATION

(11) **EP 2 840 222 B1**
(45) Date of publication and mention of the grant of the patent: **12.09.2018**
(21) Application number: 14181876.5
(22) Date of filing: 22.08.2014
(51) Int. Cl.: E06B 7/23, F16J 15/02, E06B 3/62

(54) **Weatherstrip**
Dichtungsleiste
Joint d'étanchéité

(30) Priority: 22.08.2013 SE 1350967
(43) Date of publication of application: 25.02.2015
(73) Proprietor: Trelleborg Sealing Profiles Sweden AB, 331 29 Värnamo (SE)
(72) Inventor: Arnqvist, Per, 352 43 Växjö (SE); Björnqvist, Markku, 331 42 Värnamo (SE)
(74) Representative: AWA Sweden AB

(56) References cited:
- EP-A1- 1 136 297
- WO-A1-2004/113772
- GB-A- 2 327 972
- US-B1- 6 461 723
- US-B1- 8 474 189

## Description

### Field of the invention

The present invention relates to a coloured weatherstrip for sealing a window or a door of a building. The invention also relates to a method of fabricating such a weatherstrip.

### Background of the invention

Weatherstrips are frequently used for sealing windows and doors of residential houses and other buildings. Their main purpose is generally to prevent wind and water from entering the building. Such weatherstrips are often provided with an adhesive layer for attaching the weatherstrip to e.g. the frame of a window or a door. The adhesive layer is generally protected by a strip of waxed paper, which is removed to reveal the adhesive prior to installing the weatherstrip. Weatherstrips provided with adhesive attachment means are particularly well suited for Do-It-Yourself (DIY) products for replacing or supplementing old seals of doors and windows.

Sometimes there is a wish to provide painted or coloured surfaces with weatherstrips of a reasonably matching colour, such that the weatherstrip blends elegantly with the background. The rubber compound of such weatherstrips typically contains a coloured filler or pigment selected to match the colour of the background. Weatherstrip colour is often of particular importance to DIY users.

US 6 461 723 B1 discloses a cellular rubber profile for the sealing of two components which cooperate with one another. The profile has a black base structure and a non-black overlay structure which is co-extruded with the base structure. The overlay structure overlies the base structure in the manner of a cap. Opposite the overlay structure the profile has a foot portion with lateral protuberances.

The construction industry is constantly looking for weatherstrips with improved sealing performance and extended service life.

### Summary of the invention

It is an object of the present invention to solve, or at least mitigate, parts or all of the above mentioned problems. To this end, there is provided a coloured weatherstrip for sealing a window or a door of a building according to claim 1, the weatherstrip comprising attachment means for attaching the weatherstrip to a window frame or a door frame; and a resilient sealing body, the resilient sealing body having a sealing surface for sealing against an opposing structure, the resilient sealing body having a low-density closed-cell rubber core comprising at least 10% by weight of carbon black; and a coloured low-density closed-cell rubber sealing layer, extruded over the core to form said sealing surface, the coloured low-density closed-cell rubber sealing layer comprising at least 10% by weight of a filler different from carbon black. Throughout this disclosure, "coloured" denotes the property of reflecting an appreciable portion of any incident light, thereby providing a non-black appearance. The use of a filler different from carbon black in the sealing layer allows for obtaining essentially any desired colour and appearance of the weatherstrip. Depending on the nature and amount of the filler different from carbon black in the sealing layer, it may be preferred that the low-density closed-cell rubber of the sealing layer comprise only very little, or even no, carbon black in order to allow the colour of the sealing layer to show. By way of example, less than 1% by weight of carbon black may be desired in the sealing layer. However, carbon black is the unrivalled filler when it comes to mechanical properties, sealing capability, and service life. The low density of the coloured sealing layer makes the sealing layer soft and flexible, thereby allowing the mechanical properties of the core, such as resilience and compression setting, to dominate or determine the overall mechanical properties of the sealing body. This results in the coloured weatherstrip having mechanical properties similar to those of a black weatherstrip, i.e. high resilience and low compression setting, resulting in a tighter seal between the weatherstrip and the opposing structure. In particular, compression recovery is significantly improved compared to conventional coloured weatherstrips. The service life of the weatherstrip may also be increased; even though the sealing layer, due to its relative lack of carbon black, may degrade faster than the black core, the black core will maintain the weatherstrip operational for as long as the core is intact. The colour of the sealing layer may be provided by the filler as such, and/or by a colour pigment added to the rubber composition of the sealing layer.

According to an embodiment, the sealing layer has a thickness of less than about 60% of the thickness of the core. This even further improves the balance between the sealing layer's and the core's influence on the mechanical properties of the sealing body, resulting in an even tighter seal between the weatherstrip and the opposing structure. Even more preferred, the sealing layer has a thickness of less than about 40% of the thickness of the core. It may be desired to have a sealing layer thickness exceeding about 15% of the core in order to facilitate the extrusion of the sealing layer.

According to an embodiment, the sealing layer has a thickness of less than about 0,8 mm. Such a thin sealing layer does not notably affect the resilience or service life of the sealing body. From a wear perspective, a sealing layer thickness of at least 0,2 mm may be desired.

According to an embodiment, the attachment means comprises a substantially flat, adhesive mounting surface. Such an embodiment is particularly well suited for DIY applications.

According to an embodiment, the low-density closed-cell rubber of the sealing layer comprises chromatic colour pigment. Thereby, the sealing surface of the weatherstrip will have a chromatically coloured appearance, i.e. it will exhibit an appreciable level of colour saturation.

According to an embodiment, said filler different from carbon black is calcium carbonate. Such a filler, if used without chromatic pigment, results in a white weatherstrip. Calcium carbonate may also advantageously serve as a base for breaking with a chromatic colour pigment, so as to obtain a sealing layer having a desired chromatic colour of any desired level of saturation.

According to an embodiment, a cross-section of the weatherstrip has the shape of a "D", a "P", or a "K". Such shapes are particularly well suited for windows and doors.

According to an embodiment, said core and/or sealing layer comprises ethylene propylene diene monomer, EPDM, rubber.

According to another aspect of the invention, parts or all of the above mentioned problems are solved, or at least mitigated, by a method of fabricating a coloured weatherstrip for sealing a window or a door of a building according to claim 9, the method comprising providing a core rubber compound comprising a blowing agent and at least 10% by weight of carbon black; providing a coloured sealing layer rubber compound comprising a blowing agent and at least 10% by weight of a filler different from carbon black; extruding the core rubber compound to form a rubber core; extruding the sealing layer rubber compound to form a sealing layer on the core, the sealing layer and the core together forming a strip; expanding the strip by heating it, thereby activating the blowing agent, to form a low-density closed-cell rubber structure in the sealing layer and the core; and vulcanizing the expanded strip by heating it, to form a strip-shaped, resilient sealing body. This results in a coloured weatherstrip with high resilience and low compression setting as well as a long service life.

According to an embodiment, the sealing layer is extruded to have a thickness of less than about 60%, and more preferred less than about 40%, of the thickness of the core.

According to an embodiment, the core and the sealing layer are co-extruded in a single die provided with at least two orifices.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a diagrammatic view in perspective of a D-shaped weatherstrip;
Fig. 2 is a diagrammatic view in perspective of a P-shaped weatherstrip; and
Fig. 3 is a diagrammatic view in perspective of a K-shaped weatherstrip.

### Detailed description of the exemplary embodiments

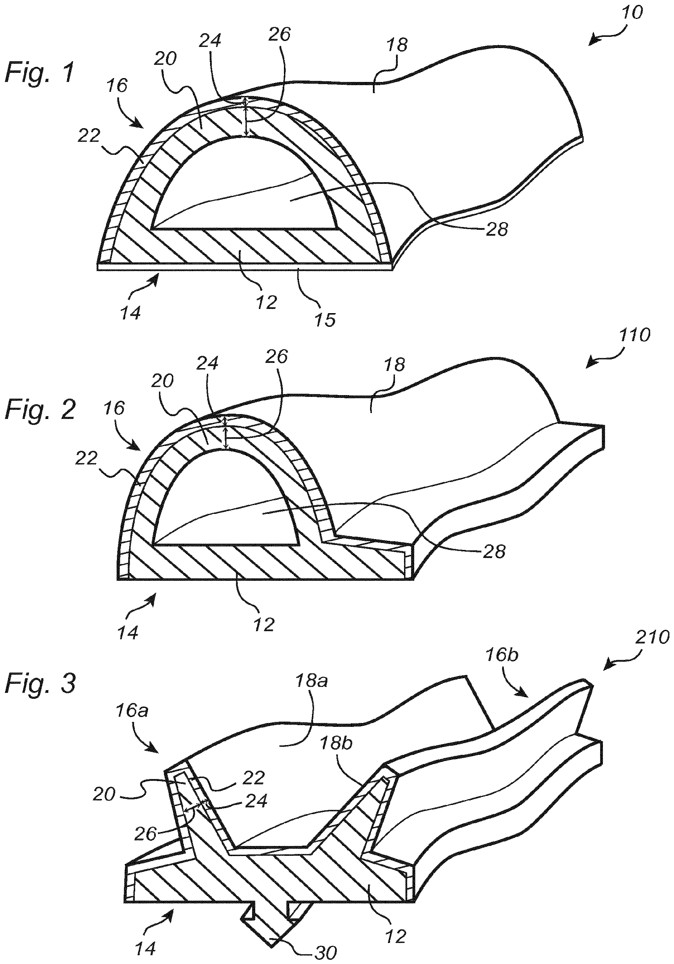

Fig. 1 illustrates a D-shaped weatherstrip 10 for sealing a window or a door of a building. The weatherstrip 10 comprises a base portion 12 with a flat mounting surface 14. The mounting surface 14 is provided with an adhesive tape 15 for attaching the weatherstrip 10 to a support structure (not shown), such as a window frame or a door frame. A resilient sealing body 16 extends from the base portion 12. The sealing body 16 has a sealing surface 18 for sealing against an opposing structure, such as a door or a window, which may be movable relative to the support structure. The sealing surface 18 faces away from the mounting surface 14.

The sealing body 16 is integrally formed of low-density cell rubber, i.e. cell rubber having a density of less than about 0,40 kg/dm3, and comprises a core 20 and a sealing layer 22 covering the core 20. The core 20 is homogeneously formed with and has the same material composition as the base portion 12, whereas the material composition of the sealing layer 22 differs from that of the core 20 and the base portion 12. The elastomer of the core 20 as well as of the sealing layer 22 may be any suitable elastomer type, or combination of elastomer types, known to those skilled in the art. By way of example, ethylene propylene diene monomer (EPDM) rubber is very well suited for weatherstrips, and may be used for forming low-density closed-cell rubber together with different types of fillers, such as carbon black, calcium carbonate, and kaolin clay. Fillers are typically used for reducing the cost of the rubber composition, since most fillers are generally less expensive than most elastomers. Fillers may also be used for modifying the appearance of the rubber, and for modifying certain mechanical properties such as increasing or decreasing the rubber's resilience, mechanical strength, and wear resistance.

The mechanical properties of the sealing body 16, such as resilience and compression set, are mainly determined by the core 20, whereas the appearance of the sealing body 16 is mainly determined by the sealing layer 22. In order to obtain a coloured surface of the sealing body 16, i.e. a surface reflecting an appreciable portion of any incident light such that it has a non-black appearance, the sealing layer 22 is formed by a cell rubber comprising at least 10% by weight of a filler different from carbon black. In order to avoid the light-absorbing nature of carbon black dominating the appearance of the weatherstrip, the cell rubber of the sealing layer preferably comprises less than 1% by weight of carbon black; even more preferred, it is substantially free from carbon black. The filler different from carbon black may alone provide a colour, such as white or brown, to the weatherstrip. Alternatively, the filler different from carbon black may be combined with a suitable colour pigment for obtaining e.g. a specific, desired chromatic colour. The low density of the closed-cell rubber of the sealing layer 22 makes the sealing layer 22 soft and flexible, thereby allowing the mechanical properties, such as resilience and compression setting, of the core 20 to dominate the mechanical properties of the sealing body 16. This results in the coloured weatherstrip 10 having mechanical properties similar to those of a black weatherstrip, i.e. high resilience and low compression setting, resulting in a tighter seal between the weatherstrip 10 and the opposing structure. Moreover, the low-density cell rubber makes the sealing layer 22 soft and flexible, which makes the surface 18 of the sealing body 16 more susceptible to follow surface structures of the opposing structure against which it is to seal. It also reduces the risk of wrinkling the sealing surface 18 when bending the weatherstrip 10 around corners. The closed-cell structure of the sealing layer 22 improves the tightness of the sealing surface 18.

In order to obtain a desired level of resilience and a low compression set of the sealing body 16, the core 20 is formed of a low-density closed-cell rubber comprising at least 10% by weight of carbon black. The use of carbon black as filler also gives the core a high resistance to ultraviolet (UV) radiation, ozone and ageing. Thereby, the core 20 will continue to maintain the weatherstrip 10 operational, with respect to its sealing capability, after the material of the sealing layer 22 has started to degrade. Stated differently, any visible degradation of the sealing layer 22 may be regarded as an early warning that the weatherstrip 10 is becoming old or has been exposed to significant amounts of UV radiation, and may need replacement, before it actually starts leaking.

In order to obtain a desired strength and wear resistance, the core 20, and preferably also the sealing layer 22, has a density of more than about 0.20 kg/dm³.

The core 20 has a thickness 26 of about 1 mm, whereas the sealing layer 22 has a thickness 24 of about 0,25 mm; i.e., the thickness 24 of the sealing layer 22 is about 25% of the thickness 26 of the core 20. The use of a sealing layer 22 that is substantially thinner than the core 20 assists in allowing the mechanical properties of the core 20 to be determinative of the mechanical properties of the entire weatherstrip 10. Moreover, as the sealing layer 22 is very thin, only fractions of a millimeter, the mechanical properties of the core 20 will positively influence the sealing body's 16 mechanical properties very close to the sealing surface 18, such as its flexibility and susceptibility to follow complex surfaces structures of the opposing structure, resulting in a tighter seal.

Together with the base 12, the sealing body 16 forms, as seen in the cross-sectional view of Fig. 1, the shape of a "D" enclosing a substantially half-circular, air-filled space 28 extending along the length of the weatherstrip 10.

Fig. 2 illustrates an alternative embodiment of a weatherstrip 110 for sealing a window or a door of a building. The weatherstrip 110 differs from the weatherstrip 10 of Fig. 1 in that it has the general shape of a "P" as seen in the cross-sectional view of Fig. 2. Again, the weatherstrip 110 comprises a base portion 12 with a flat mounting surface 14. The mounting surface 14 is not provided with adhesive tape; instead, any suitable adhesive may be applied to either the weatherstrip or to e.g. a window frame when installing the weatherstrip. Alternatively, the weatherstrip may be attached using clips, nails, or other fasteners. A resilient sealing body 16, with a sealing surface 18, extends from the base portion 12. The sealing body 16 comprises a core 20, and a coloured sealing layer 22 having a thickness 24 of about 35% of the thickness 26 of the core 20.

The weatherstrip 110 of Fig. 2 may be formed by the same respective types of core and sealing layer cell rubbers as have been described above with reference to the weatherstrip 10, again resulting in a coloured weatherstrip 110 having the advantageous mechanical properties of a black weatherstrip.

Fig. 3 illustrates yet an alternative embodiment of a weatherstrip 210 for sealing a window or a door of a building. Again, the weatherstrip 210 comprises a base portion 12 with a flat mounting surface 14. The weatherstrip 210 differs from the weatherstrips 10, 110 of Figs 1-2 in that it comprises more than one sealing body; in the particular example illustrated, the sealing strip 210 comprises two strip-shaped, resilient sealing bodies 16a, 16b, each with a respective sealing surface 18a, 18b, extending from the base portion 12. The sealing bodies 16a, 16b of the weatherstrip 210 of Fig. 3 do not enclose any air-filled space 28 (Figs 1-2); instead, the weatherstrip 210 has, as seen in the cross-sectional view of Fig. 3, substantially the shape of a "K". A first sealing body 16a of said two sealing bodies 16a, 16b comprises, as seen in the cross-section of Fig. 3, an outwardly tapering core 20 covered by a sealing layer 22 of substantially uniform thickness. The thickness 24 of the sealing layer 22 ranges from about 20% of the thickness 26 of the core 20 at the base of the sealing body 16a, to about 50% of the thickness 26 of the core 20 at the top of the sealing body 16a. The second sealing body 16b is shaped similarly. An anchor member 30, for attaching the weatherstrip 210 to a support structure such as a window or door frame, extends from the mounting surface 14 along the length of the weatherstrip 210. The anchor member 30 is adapted to be pressed into a mating groove extending along the support structure.

The weatherstrip 210 of Fig. 3 may be formed by the same respective core and sealing layer cell rubbers as have been described above with reference to the weatherstrip 10, again resulting in a coloured weatherstrip 210 having the advantageous mechanical properties of a black weatherstrip.

Any of the embodiments described hereinbefore may be fabricated by forming the core 20 and applying the sealing layer 22 in consecutive extrusion steps, or by co-extruding the core 20 and the sealing layer 22 in a single die. The core 20 and the sealing layer 22 may be expanded and vulcanized in a single process step by heating the extruded weatherstrip in e.g. a 220°C salt bath; this creates a strong bond and a more or less seamless interface between the core 20 and the sealing layer 22. Thereby, a strong mechanical coupling between the sealing layer 22 and the core 20 will be warranted.

The invention has mainly been described above with reference to a few embodiments. However, as is readily appreciated by a person skilled in the art, other embodiments than the ones disclosed above are equally possible within the scope of the invention, as defined by the appended patent claims.

For example, even though "P", "D", and "K"-shaped weatherstrips have been illustrated, the teachings herein are also applicable to other shapes, such as "E"- or crown-shapes.

The invention is not limited to EPDM rubber; also other elastomers, such as nitrile butadiene rubber (NBR) and polyurethane, are suitable for weatherstrips. Similarly, many different fillers and pigments may be used for obtaining a coloured sealing layer. Some specific exemplary fillers are calcium carbonate, kaolin clay, precipitated silica, talc, barite, wollastonite, mica, precipitated silicates, fumed silica, and diatomite.

In the illustrated examples, the sealing layer 22 covers the entire visible surface of the weatherstrip when installed. This is not necessary; instead, it may cover only parts thereof, partly exposing the core and/or the base. Similarly, even though the mounting surface 14 of the illustrated examples is formed by black rubber, it may as an alternative be completely or partly covered by the coloured sealing layer 22.

The base portion 12 and the core 20 may be formed by mutually different materials. In fact, the base 12 portion may be formed by a material other than low-density closed-cell rubber, such as plastic.

## Claims

1. A coloured weatherstrip for sealing a window or a door of a building, the weatherstrip comprising
attachment means (15; 30) for attaching the weatherstrip (10; 110; 210) to a window frame or a door frame; and
a resilient sealing body (16; 16a, 16b), the resilient sealing body (16; 16a, 16b) having a sealing surface (18; 18a, 18b) for sealing against an opposing structure, the resilient sealing body (16; 16a, 16b) having
a cell rubber core (20) comprising carbon black; and
a coloured cell rubber sealing layer (22), extruded over the core (20) to form said sealing surface (18; 18a, 18b), the coloured cell rubber sealing layer (22) comprising a filler different from carbon black,
the weatherstrip (10; 110; 210) being **characterized by**
the cell rubber core (20) being a low-density closed-cell rubber core (20) comprising at least 10% by weight of carbon black; and
the coloured cell rubber sealing layer (22) being a low-density closed-cell rubber sealing layer (22) comprising at least at least 10% by weight of the filler different from carbon black,
wherein low-density cell rubber is defined as cell rubber having a density of less than about 0,40 kg/dm3.

2. The coloured weatherstrip according to claim 1, the sealing layer (22) having a thickness (24) of less than about 60%, and more preferred less than about 40%, of the thickness (26) of the core (20).

3. The coloured weatherstrip according to any of the previous claims, the sealing layer (22) having a thickness of less than about 0,8 mm.

4. The coloured weatherstrip according to any of the previous claims, the attachment means comprising a substantially flat, adhesive mounting surface (14).

5. The coloured weatherstrip according to any of the previous claims, wherein the low-density closed-cell rubber of the sealing layer (22) comprises chromatic colour pigment.

6. The coloured weatherstrip according to any of the previous claims, wherein said filler different from carbon black is calcium carbonate.

7. The coloured weatherstrip according to any of the previous claims, a cross-section of the weatherstrip (10; 110; 210) having the shape of a "D", a "P", or a "K".

8. The coloured weatherstrip according to any of the previous claims, said core (20) and/or sealing layer (22) comprising ethylene propylene diene monomer, EPDM, rubber.

9. A method of fabricating a coloured weatherstrip (10; 110; 210) for sealing a window or a door of a building, the method comprising:
providing a core rubber compound comprising carbon black;
providing a coloured sealing layer rubber compound comprising a filler different from carbon black;
extruding the core rubber compound to form a rubber core (20);
extruding the sealing layer rubber compound to form a sealing layer (22) on the core (20), the sealing layer (22) and the core (20) together forming a strip; the method being **characterized by**
said core rubber compound comprising a blowing agent and at least 10% by weight of carbon black; and
said coloured sealing layer rubber compound comprising a blowing agent and at least 10% by weight of the filler different from carbon black,
the method further comprising
expanding the strip by heating it, thereby activating the blowing agent, to form a low-density closed-cell rubber structure in the sealing layer (22) and the core (20), wherein low-density cell rubber is defined as cell rubber having a density of less than about 0,40 kg/dm3; and
vulcanizing the expanded strip by heating it, to form a strip-shaped, resilient sealing body (16; 16a, 16b).

10. The method according to claim 9, the sealing layer (22) being extruded to have a thickness of less than about 60%, and more preferred less than about 40%, of the thickness of the core (20).

11. The method of any of the claims 9-10, wherein the core and the sealing layer are co-extruded in a single die provided with at least two orifices.

## Patentansprüche

1. Gefärbter Dichtungsstreifen zum Abdichten eines Fensters oder einer Tür eines Gebäudes, wobei der Dichtungsstreifen Folgendes aufweist:
Befestigungsmittel (15; 30) zum Befestigen des Dichtungsstreifens (10; 110; 210) an einem Fensterrahmen oder einem Türrahmen; und
einen elastischen Dichtungskörper (16; 16a; 16b), wobei der elastische Dichtungskörper (16; 16a; 16b) eine Dichtungsfläche (18; 18a; 18b) zum Abdichten gegen eine gegenüberliegende Struktur aufweist, wobei der elastische Dichtungskörper (16; 16a; 16b) einen Zellkautschukkern (20), der Ruß umfasst; und
eine gefärbte Zellkautschuk-Dichtungsschicht (22), die über den Kern (20) extrudiert wird, um die Dichtungsfläche (18; 18a; 18b) zu bilden, wobei die gefärbte Zellkautschuk-Dichtungsschicht (22) einen von Ruß unterschiedlichen Füllstoff umfasst,
aufweist,
wobei der Dichtungsstreifen (10; 110; 210) **dadurch gekennzeichnet ist, dass**
der Zellkautschukkern (20) ein geschlossener Zellkautschukkern (20) niedriger Dichte ist, der mindestens 10 Gew.-% Ruß umfasst; und
die gefärbte Zellkautschuk-Dichtungsschicht (22) eine geschlossene Zellkautschuk-Dichtungsschicht (22) niedriger Dichte ist, die mindestens 10 Gew.-% des von Ruß unterschiedlichen Füllstoffs umfasst,
wobei der Zellkautschuk niedriger Dichte als Zellkautschuk mit einer Dichte von weniger als ungefähr 0,40 kg/dm3 definiert ist.

2. Gefärbter Dichtungsstreifen nach Anspruch 1, wobei die Dichtungsschicht (22) eine Dicke (24) von weniger als ungefähr 60 % und weiter bevorzugt von weniger als ungefähr 40 % der Dicke (26) des Kerns (20) aufweist.

3. Gefärbter Dichtungsstreifen nach einem der vorhergehenden Ansprüche, wobei die Dichtungsschicht (22) eine Dicke von weniger als ungefähr 0,8 mm aufweist.

4. Gefärbter Dichtungsstreifen nach einem der vorhergehenden Ansprüche, wobei die Befestigungsmittel eine im Wesentlichen flache Haftbefestigungsfläche (14) aufweisen.

5. Gefärbter Dichtungsstreifen nach einem der vorhergehenden Ansprüche, wobei der geschlossene Zellkautschuk niedriger Dichte der Dichtungsschicht (22) chromatische Farbpigmente umfasst.

6. Gefärbter Dichtungsstreifen nach einem der vorhergehenden Ansprüche, wobei es sich bei dem von Ruß unterschiedlichen Füllstoff um Calciumcarbonat handelt.

7. Gefärbter Dichtungsstreifen nach einem der vorhergehenden Ansprüche, wobei ein Querschnitt des Dichtungsstreifens (10; 110; 210) die Form eines "D", eines "P" oder eines "K" aufweist.

8. Gefärbter Dichtungsstreifen nach einem der vorhergehenden Ansprüche, wobei der Kern (20) und/oder die Dichtungsschicht (22) Ethylenpropylendienmonomer(EPDM)-Kautschuk umfasst.

9. Verfahren zum Herstellen eines gefärbten Dichtungsstreifens (10; 110; 210) zum Abdichten eines Fensters oder einer Tür eines Gebäudes, wobei das Verfahren Folgendes aufweist:
Bereitstellen einer Kernkautschukverbindung, die Ruß umfasst;
Bereitstellen einer gefärbten Dichtungsschichtkautschukverbindung, die einen von Ruß unterschiedlichen Füllstoff umfasst;
Extrudieren der Kernkautschukverbindung, um einen Kautschukkern (20) auszuformen;
Extrudieren der Dichtungsschichtkautschukverbindung, um eine Dichtungsschicht (22) auf dem Kern (20) auszuformen, wobei die Dichtungsschicht (22) und der Kern (20) zusammen einen Streifen bilden;
wobei das Verfahren **dadurch gekennzeichnet ist, dass** die Kernkautschukverbindung ein Treibmittel und mindestens 10 Gew.-% Ruß umfasst; und
die gefärbte Dichtungsschichtkautschukverbindung ein Treibmittel und mindestens 10 Gew.-% des von Ruß unterschiedlichen Füllstoffs umfasst,
wobei das Verfahren Folgendes aufweist:
Erweitern des Streifens unter Erhitzen, wodurch das Treibmittel aktiviert wird, um eine geschlossene Zellkautschukstruktur niedriger Dichte in der Dichtungsschicht (22) und dem Kern (20) zu bilden,
wobei Zellkautschuk niedriger Dichte als Zellkautschuk mit einer Dichte von weniger als ungefähr 0,40 kg/dm3 definiert ist; und
Vulkanisieren des erweiterten Streifens unter Erhitzen, um einen streifenförmigen elastischen Dichtungskörper (16; 16a; 16b) auszuformen.

10. Verfahren nach Anspruch 9, wobei die Dichtungsschicht (22) extrudiert wird, um eine Dicke von weniger als ungefähr 60 % und weiter bevorzugt weniger als ungefähr 40 % der Dicke des Kerns (20) aufzuweisen.

11. Verfahren nach einem der Ansprüche 9 bis 10, wobei der Kern und die Dichtungsschicht in einer einzelnen Gussform, die mit zwei Öffnungen versehen ist, coextrudiert werden.

## Revendications

1. Bourrelet d'étanchéité coloré pour étanchéifier une fenêtre ou porte d'un bâtiment, le bourrelet d'étanchéité comprenant
des moyens de fixation (15 ; 30) pour fixer le bourrelet d'étanchéité (10 ; 110 ; 210) à un cadre de porte ou un cadre de fenêtre ; et
un corps d'étanchéité élastique (16 ; 16a, 16b), le corps d'étanchéité élastique (16 ; 16a, 16b) ayant une surface d'étanchéité (18 ; 18a, 18b) pour l'étanchéification par rapport à une structure opposée, le corps d'étanchéité élastique (16 ; 16a, 16b) ayant
un noyau en caoutchouc à cellules (20) comprenant du noir de carbone ; et
une couche d'étanchéité en caoutchouc à cellules colorée (22) extrudée sur le noyau (20) pour former ladite surface d'étanchéité (18 ; 18a, 18b), la couche d'étanchéité en caoutchouc à cellules colorée (22) comprenant une charge différente du noir de carbone,
le bourrelet d'étanchéité (10 ; 110 ; 210) **se caractérisant par** le noyau en caoutchouc à cellules (20) étant un noyau en caoutchouc à cellules fermées de faible densité (20) comprenant au moins 10% en poids de noir de carbone ; et
la couche d'étanchéité en caoutchouc à cellules colorée (22) étant une couche d'étanchéité en caoutchouc à cellules fermées de faible densité (22) comprenant au moins 10% en poids de la charge différente du noir de carbone,
dans lequel du caoutchouc à cellules de faible densité est défini en tant qu'un caoutchouc à cellules ayant une densité de moins de près de 0,40 kg/dm3.

2. Bourrelet d'étanchéité coloré selon la revendication 1, la couche d'étanchéité (22) ayant une épaisseur (24) de moins de près de 60%, et de manière davantage préférée, de moins de près de 40% de l'épaisseur (26) du noyau (20).

3. Bourrelet d'étanchéité coloré selon l'une quelconque des revendications précédentes, la couche d'étanchéité (22) ayant une épaisseur de moins de près de 0,8 mm.

4. Bourrelet d'étanchéité coloré selon l'une quelconque des revendications précédentes, les moyens de fixation comprenant une surface de montage adhésive (14) sensiblement plate.

5. Bourrelet d'étanchéité coloré selon l'une quelconque des revendications précédentes, dans lequel le caoutchouc à cellules fermées de faible densité de la couche d'étanchéité (22) comprend un pigment de couleur chromatique.

6. Bourrelet d'étanchéité coloré selon l'une quelconque des revendications précédentes, dans lequel ladite charge différente du noir de carbone est du carbonate de calcium.

7. Bourrelet d'étanchéité coloré selon l'une quelconque des revendications précédentes, une section transversale du bourrelet d'étanchéité (10 ; 110 ; 210) ayant la forme d'un « D », d'un « P », ou d'un « K ».

8. Bourrelet d'étanchéité coloré selon l'une quelconque des revendications précédentes, lesdits noyau (20) et/ou couche d'étanchéité (22) comprenant un caoutchouc d'éthylène propylène diène monomère, EPDM.

9. Procédé de fabrication d'un bourrelet d'étanchéité coloré (10 ; 110 ; 210) pour l'étanchéification d'une fenêtre ou d'une porte d'un bâtiment, le procédé comprenant :
la fourniture d'un mélange de caoutchouc de noyau comprenant du noir de carbone ;
la fourniture d'un mélange de caoutchouc de couche d'étanchéité colorée comprenant une charge différente du noir de carbone ;
l'extrusion du mélange de caoutchouc de noyau pour former un noyau en caoutchouc (20) ;
l'extrusion du mélange de caoutchouc de couche d'étanchéité pour former une couche d'étanchéité (22) sur le noyau (20), la couche d'étanchéité (22) et le noyau (20) formant ensemble un bourrelet ; le procédé **se caractérisant par**
ledit mélange de caoutchouc de noyau comprenant un agent gonflant et au moins 10% en poids de noir de carbone ; et
ledit mélange de caoutchouc de couche d'étanchéité colorée comprenant un agent gonflant et au moins 10% en poids de la charge différente du noir de carbone,
le procédé comprenant en outre
l'expansion du bourrelet en le chauffant, en activant ainsi l'agent gonflant pour former une structure en caoutchouc à cellules fermées de faible densité dans la couche d'étanchéité (22) et le noyau (20),
dans lequel du caoutchouc à cellules de faible densité est défini en tant que caoutchouc à cellules ayant une densité de moins de près de 0,40 kg/dm3 ; et
la vulcanisation du bourrelet expansé en le chauffant pour former un corps d'étanchéité élastique (16 ; 16a, 16b) en forme de bourrelet.

10. Procédé selon la revendication 9, la couche d'étanchéité (22) étant extrudée pour avoir une épaisseur de moins de près de 60%, et de manière davantage préférée, de moins de près de 40% de l'épaisseur du noyau (20).

11. Procédé selon l'une quelconque des revendications 9-10, dans lequel le noyau et la couche d'étanchéité sont coextrudés dans une seule filière dotée d'au moins deux orifices.
